# EUROPÄISCHE PATENTANMELDUNG

(11) **EP 0 807 487 A2**
(43) Veröffentlichungstag der Anmeldung: **19.11.1997**
(21) Anmeldenummer: 96117819.1
(22) Anmeldetag: 07.11.1996
(51) Int. Cl.: B23K 26/08

(54) **Einrichtung zum Transportieren, Spannen und Laserstrahlschweissen von mindestens zwei Blechplatinen**

(30) Priorität: 13.05.1996 DE 19619231
(71) Anmelder: Krupp Drauz Ingenieurbetrieb GmbH, 09337 Hohenstein-Ernstthal (DE)
(72) Erfinder: Stein, Hans, 9358 Wüstenbrand (DE); Wilkerling, Udo, 9350 Lichtenstein (DE)
(74) Vertreter: Illing, Ralf, Dipl.-Jur. Ing.

(57) **Zusammenfassung**

Die Einrichtung soll mindestens zwei Blechplatinen gleicher oder unterschiedlicher Stärken, gleicher oder unterschiedlicher Größen und Formen und gleicher oder unterschiedlicher Werkstoffe transportieren und spannen sowie mittels Laserstrahl zu einer Blechplatine verschweißen.

Durch zwei nebeneinander liegende Schweißtische und Transporteinrichtungen für den Zu- und Abtransport werden mit wenig Platz- und Bewegungsaufwand mindestens zwei Schweißnähte zur Verbindung von drei verschiedenen Blechplatinen ausgeführt. Die Schweißbalken sind vielseitig verstellbar und ermöglichen Schweißnähte mit unterschiedlichen Lagen. Die Ausführung des Schweißbalkens und der Spanneinrichtung sichern ständig optimale Schweißbedingungen. Eine schnelle Umrüstung ist gewährleistet.

Die Einrichtung dient der Herstellung von Karosserieblechen für Kraftfahrzeuge.

## Beschreibung

Die Erfindung betrifft eine Einrichtung zum Transportieren, Spannen und Laserstrahlschweißen von mindestens zwei Blechplatinen gleicher oder unterschiedlicher Stärken, gleicher oder unterschiedlicher Größen und Formen und gleicher oder unterschiedlicher Werkstoffe zu einer Blechplatine.

Es ist eine Einrichtung zum Verschweißen von mindestens zwei geometrisch unterschiedlich gestalteter Blechtafeln bekannt. Diese Blechtafeln können ein- oder doppelseitig beschichtet sein und gleiche oder unterschiedliche Blechdicke haben. Sie werden insbesondere im Kfz-Karosseriebau verwendet. Zum Schweißen kommt eine Laserstrahlschweißeinrichtung zum Einsatz. Es werden zwei parallel zueinander angeordnete Fördereinrichtungen mit einer großen Anzahl von Spannpaletten verwendet. In jede Spannpalette wird eine Blechtafel aus einem Vereinzelungsmagazin zugeführt und dort gespannt. Durch die Fördereinrichtungen werden die Spannpaletten unter einer Laserstrahlschweißeinrichtung nach vorheriger aufwendiger Schweißspaltpositionierung hindurchgeführt, wobei die Schweißnaht erzeugt wird. Danach werden die verschweißten Blechtafeln an eine gleichartige Anlage zur Anfügung einer weiteren Blechtafel übergeben oder der Weiterverarbeitung zugeführt. Die Spannpaletten werden dann unterhalb des vorstehend beschriebenen Förderstranges an ihre Ausgangsstelle zurückbefördert und dort neu beladen.
Um die jeweils die zusammenzuschweißenden Blechtafeln tragenden Spannpaletten beim Schweißvorgang genau zueinander zu positionieren, bedarf es an der Schweißanlage einer zusätzlichen zwangsläufigen Fördereinrichtung, die die zusammengehörigen Palettenpaare synchron durch die Schweißanlage bewegt. Diese Anlage erfordert durch die verwendeten Fördereinrichtungen einen hohen Platzbedarf. Da die Blechtafeln während des Schweißvorganges bewegt werden müssen, ist es nicht möglich, ständig optimale Schweißbedingungen zu gewährleisten. Dadurch entstehen teilweise unbefriedigende Schweißnähte, die für eine Weiterverarbeitung nicht geeignet sind. Durch die Art der Vereinzelung der Blechtafeln und die auf sie abgestimmten Spanneinrichtungen ist eine Umrüstung der Anlage auf andere Blechtafeln mit hohem Aufwand verbunden. Nichtparallele Schweißnähte sind auf dieser Anlage nicht herstellbar (EP 0 438 615 A1).

Es ist Aufgabe der Erfindung, eine Einrichtung der oben genannten Gattung dahingehend zu verbessern, daß der Platzbedarf erheblich reduziert ist und daß die Einrichtung auch geeignet ist, Schweißnähte an nichtparallelen Verbindungskanten von Blechplatinen auszuführen. Weiterhin soll die Einrichtung auf Blechplatinen anderer Größe und/oder anderer Form mit wenig Aufwand umrüstbar sein. Die Ausbildung der Schweißanlage soll während des Schweißvorganges konstant optimale Schweißbedingungen einhalten. Die Einrichtung soll auch wirtschaftlich für kleinere Losgrößen verwendbar sein, obwohl die prinzipielle Gestaltung der Baugruppen auf die Bearbeitung großer Stückzahlen ausgelegt sein soll.

Die Aufgabe wird erfindungsgemäß durch die Merkmale des Patentanspruches 1 gelöst. Die Patentansprüche 2 bis 9 beinhalten vorteilhafte Ausgestaltungen der Merkmale des Patentanspruches 1.

Die Lösung nach Patentanspruch 1 ermöglicht es durch die nebeneinanderliegenden beiden Schweißtische mit wenig Platz- und Bewegungsaufwand mindestens zwei Schweißnähte zur Verbindung von drei verschiedenen Blechplatinen auszuführen. Durch die vielseitige Verstellbarkeit der Schweißbalken lassen sich diese an die unterschiedlichen Lagen der Schweißnähte auf einfache und schnelle Weise anpassen. Die Spannung der Blechplatinen von unten gegen den Schweißbalken ergibt zusammen mit der auf dem Schweißbalken verfahrbaren Schweißoptik optimale Schweißbedingungen und damit einwandfreie Schweißnähte.

Die Greiferzangen bewegen in wenig aufwendiger Art die verschweißten Blechplatinen von Schweißtisch zu Schweißtisch bzw. zum Ablagetisch.
Patentanspruch 2 beschreibt einen gemeinsamen Laser für beide Schweißtische. Diese Lösung wird ermöglicht durch die unmittelbar nebeneinander angeordneten Schweißtische und führt zu hohen Kosteneinsparungen.
Die Patentansprüche 3 bis 7 und 9 zeigen die breit gefächerte Anwendbarkeit für die unterschiedlichen Stückzahlen von Blechplatinen sowie deren Formen, wobei die Umrüstung der Anlage von einer Blechplatinenform auf eine andere mit geringem Aufwand und somit sehr schnell möglich ist.
Nach Patentanspruch 8 kann die Einrichtung für Fälle von seltener Umrüstung manuell verstellt werden. Bei häufiger Umrüstung sind numerische Positionierantriebe vorteilhaft einsetzbar.

In den Zeichnungen ist die Erfindung an mehreren Ausführungsbeispielen erläutert. Es zeigen
- Fig. 1: eine Draufsicht auf die vollständige Einrichtung.
- Fig. 2: eine Draufsicht auf beide Schweißtische mit zwei tischgroßen Platinen und einer Schweißnaht und
- Fig. 3: eine Draufsicht auf beide Schweißtische mit schräggestellten Schweißbalken.

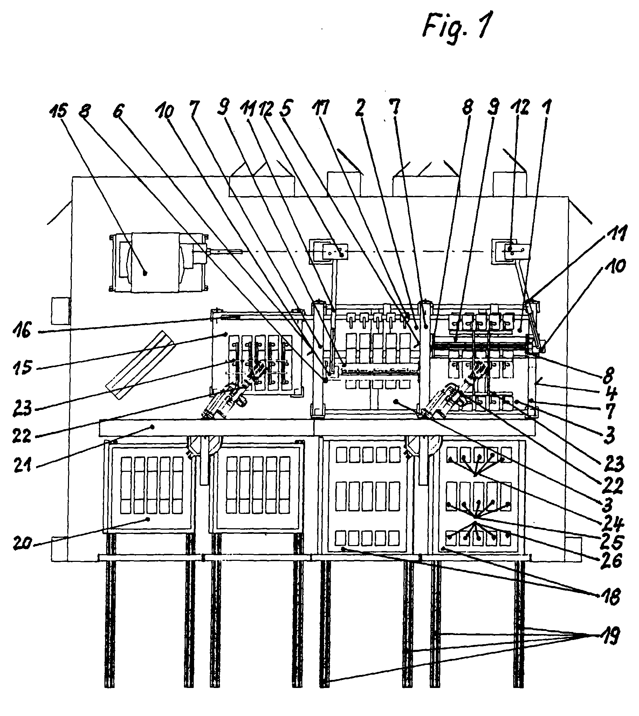

In Fig. 1 sind unmittelbar nebeneinander zwei Schweißtische 1;2 angeordnet. Ihre Tischfläche 3 besteht aus leistenförmigen Elementen, die leicht wechselbar in den seitlichen Rahmenteilen 4;5;6 der Schweißtische 1;2 geführt sind. Die Rahmenteile 4;5;6 der Schweißtische 1;2 befinden sich an den quer zur Schweißrichtung liegenden Seiten der Schweißtische 1;2. Oberhalb der Tischflächen 3 sind die Rahmenteile 4;5;6 als Portal ausgebildet, auf deren horizontal verlaufenden Trägern parallel zu den Tischflächen 3 liegende Führungen 7 vorgesehen sind. Auf jeder dieser Führungen 7 ist ein Schlitten 8 verfahr- und feststellbar gelagert. Diese Schlitten 8 tragen jeder ein Ende eines Schweißbalkens 9, der sich in Schweißrichtung quer über den Schweißtisch 1;2 erstreckt. Der nicht gezeichnete Querschnitt durch den Schweißbalken 9 besteht aus zwei L-förmigen Wangen, deren kurze Schenkel zueinander zeigen und einen schmalen Schlitz bilden, der über der Schweißfuge angeordnet ist. Auf der Oberseite der Wangen ist je eine Führung angeordnet, auf der ein Schlitten 10 verfahrbar gelagert ist. Der Schlitten 10 trägt eine Schweißoptik, die über eine Strahlführung 11 mit einem Spiegel einer neben dem Schweißtisch 1 angeordneten Weiche 12 zusammenarbeitet. Diese Weiche 12 und die Weiche 12 des anderen Schweißtisches 2 liegt im Strahlengang eines Lasergerätes 13. Unterhalb des Schweißbalkens 10 ist in der Tischfläche 3 die Oberfläche einer gegen die Unterseite des Schweißbalkens 9 wirkenden Spanneinrichtung 14 angeordnet. Die Spanneinrichtung 14 ist in gleicher Weise verschieb- und feststellbar gelagert wie der Schweißbalken 9. Parallel zum Schweißbalken 9 ist an der freien Seite des Schweißtisches 1;2 eine durch die Portale beider Schweißtische 1;2 bis zum Ablagetisch 15 reichende Führung 16 befestigt. An den auf ihr für jeden Schweißtisch 1;2 gelagerten Schlitten sind entsprechend der Anzahl der gleichzeitig zu verschweißenden Blechplatinen Greiferzangen 17 angebracht, die in der Tischebene liegend, die geschweißten Blechplatinen taktweise transportieren. In der Tischfläche 3 sind entsprechend der Blechplatinen-Formen kegelförmige Führungsmittel (nicht gezeichnet) verstellbar angeordnet. Zwischen diesen befindet sich je eine Schubkolbeneinheit (nicht gezeichnet), deren Kolbenstange zur Schweißfuge gerichtet ist. Die Ausgangsstellung der Kolbenstange ist so gewählt, daß vor ihr die zu schweißende Blechplatine abgelegt werden kann und dann durch den Hub der Kolbenstange mit ihrer zu verschweißenden Kante auf die Schweißfuge positioniert wird. Derartige Schubkolbeneinheiten sind beidseitig des Schweißbalkens 9 angeordnet.
Spiegelbildlich sind neben den beiden Schweißtischen 1;2 zwei Transportpaletten 18 auf von den Schweißtischen 1;2 wegweisenden Führungsschienen 19 gelagert. Auf den Transportpaletten 18 sind zwischen verstellbaren Führungsmitteln, wie Rungen, die einzelnen Blechplatinen stapelweise in der Anordnung gelagert, die sie dann auf den Schweißtischen 1;2 einnehmen sollen. Neben den Transportpaletten 18 sind in gleicher Anordnung Fertigteilpaletten 20 vorgesehen.
Neben den beiden Schweißtischen 1;2 (in Schweißrichtung gesehen) ist ein Ablagetisch 15 für die fertiggeschweißten Blechplatinen angeordnet.
Zwischen den Transportpaletten 18 und den Fertigteilpaletten 20 einerseits und den Schweißtischen 1;2 und dem Ablagetisch 15 andererseits ist ein die gesamte Länge überdeckendes Portal 21 aufgestellt. An diesem sind Transportroboter 22 angebracht, von denen einer die einzelnen Platinen mittels einer Saugerspinne 23 zum ersten und zweiten Schweißtisch 1;2 transportiert und der andere die fertiggeschweißten Blechplatinen ebenfalls mittels einer Saugerspinne 23 zur Weiterverarbeitung oder zum Abtransport bringt.

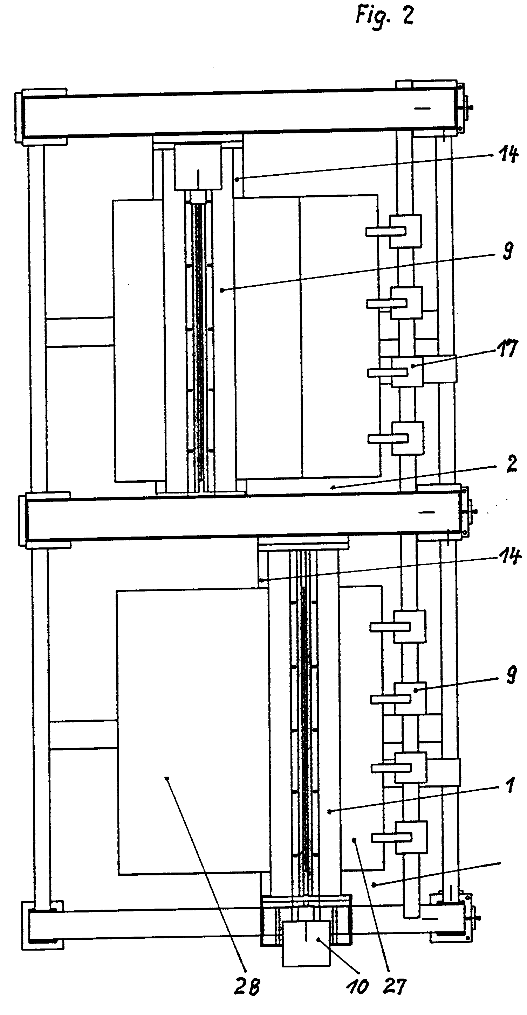

Die Arbeitsweise der Einrichtung ist folgende:
Außerhalb der Einrichtung werden auf den Transportpaletten 18 Rungen so eingestellt, daß sie die Blechplatinen in der späteren Schweißposition halten. In der Fig. 1 sind drei verschieden große und dicke Blechplatinen 24;25;26 miteinander zu verbinden. Die Größe der Schweißtische 1;2 erlaubt es, fünf derartiger Blechplatinenspalten nebeneinander aufzulegen. Die Transportpalette 18 wird in die Anlage eingefahren und dort festgestellt. Nun werden die Platinenstapel in bekannter Weise gespreizt und die obere Lage der Blechplatinen durch die darübergeschwenkte Saugerspinne 23 erfaßt. Der Transportroboter 22 schwenkt dann die Saugerspinne 23 über den ersten Schweißtisch 1 und legt dort die erste 24 und zweite Reihe Blechplatinen 25 beidseitig des Schweißbalkens 9 ab. Anschließend schwenkt der Transportroboter 22 weiter zum zweiten Schweißtisch 2 und legt dort die dritte Reihe der Blechplatinen 26 neben dem Schweißbalken 9 ab. Danach schwenkt der Transportroboter 22 zurück zur Transportpalette 18 und erfaßt dort eine weitere Lage Blechplatinen 24;25;26. Zwischenzeitlich werden die Blechplatinen 24 der ersten Reihe zwischen den Zentrierkegeln durch die Kolbenstangen der Schubkolbeneinheiten auf die Schweißfuge positioniert und dort durch die Spanneinrichtung 14 gegen den Schweißbalken 9 gespannt. Anschließend werden die Blechplatinen 25 der zweiten Reihe durch deren Schubkolbeneinheiten gegen die erste Reihe 24 gedrückt und dort gespannt. Auf diese Weise liegen die Blechplatinen 24;25 mit ihrer zum Schweißbalken 9 zeigenden Oberfläche genau in einer Ebene. Nun wird der Schlitten 10 mit der Schweißoptik entlang der Schweißfuge verfahren und durch den entsprechend gesteuerten Laserstrahl die Schweißnaht erzeugt. Zwischenzeitlich haben die Greiferzangen 17 die ihnen zugewandten Blechplatinen 24 ergriffen. Nach Lösen der Spanneinrichtung 14 werden die Greiferzangen 17 mit den verschweißten Blechplatinen 24;25 zum zweiten Schweißtisch 2 verfahren. Dort werden die verschweißten Blechplatinen 24;25 in gleicher Weise unter die Schweißfuge positioniert und gespannt. Nun wird die dritte Reihe Blechplatinen 26 durch die dortigen Schubkolbeneinheiten gegen die gespannten Blechplatinen 24;25 gedrückt und gespannt in der vorstehend beschriebenen Art verschweißt. Zwischenzeitlich sind die Greiferzangen 17 des ersten Schweißtisches 1 nach dort zurückgefahren worden und ergreifen die verschweißten ersten und zweiten Reihen Blechplatinen des Folgetaktes. Die Greiferzangen 17 des zweiten Schweißtisches 2 ergreifen die verschweißten Blechplatinen 24;25;26 der ersten, zweiten und dritten Reihe. Diese werden durch Verschieben der Greiferzangen 17 auf den Ablagetisch 15 bewegt, während die Greiferzangen 17 des ersten Schweißtisches 1 die der verschweißten Blechplatinen der ersten und zweiten Reihe des Foltgetaktes unter die Schweißfuge des zweiten Schweißtisches 2 bewegen. In diesen Transportablauf sind die Bewegungen des zuführenden Transportroboters 22 taktgemäß eingeordnet. Der abführende Transportroboter 22 entnimmt im gleichen Rhythmus die fertiggeschweißten Blechplatinen 24;25;26 vom Ablagetisch 15 und bringt sie von Fall zu Fall entweder zur Weiterverarbeitung oder legt sie stapelweise auf den Fertigteilpaletten 20 ab. In Fig. 2 ist das Verschweißen zweier großer Blechplatinen 27;28 mit parallelen Kanten und einer Schweißnaht gezeigt. Diese beiden Blechplatinen 27;28 werden mit der Saugerspinne 23 des Transportroboters 22 von der Transportpalette 18 geholt und beidseitig des Schweißbalkens 9 auf dem ersten Schweißtisch 1 abgelegt. Dort wird eine Blechplatine 27 unter die Schweißfuge positioniert und gespannt. Anschließend wird die zweite Blechplatine 28 gegen die festgespannte erste Blechplatine 27 gedrückt und ebenfalls gespannt. Nun verfährt der Schlitten 10 mit der Schweißoptik entlang des Schweißbalkens 9 und erzeugt dabei die Schweißnaht. Währenddessen haben die Greiferzangen 17 die erste Blechplatine 27 erfaßt und transportieren nach Lösen der Spannung die verschweißte erste und zweite Blechplatine 27;28 auf den zweiten Schweißtisch 2. Da nur eine Schweißnaht auszuführen ist, dient dieser Schweißtisch 2 als Zwischenlager. Beim nächsten Takt wird die dort abgelegte verschweißte Blechplatine 27;28 zum Ablagetisch 15 bewegt.

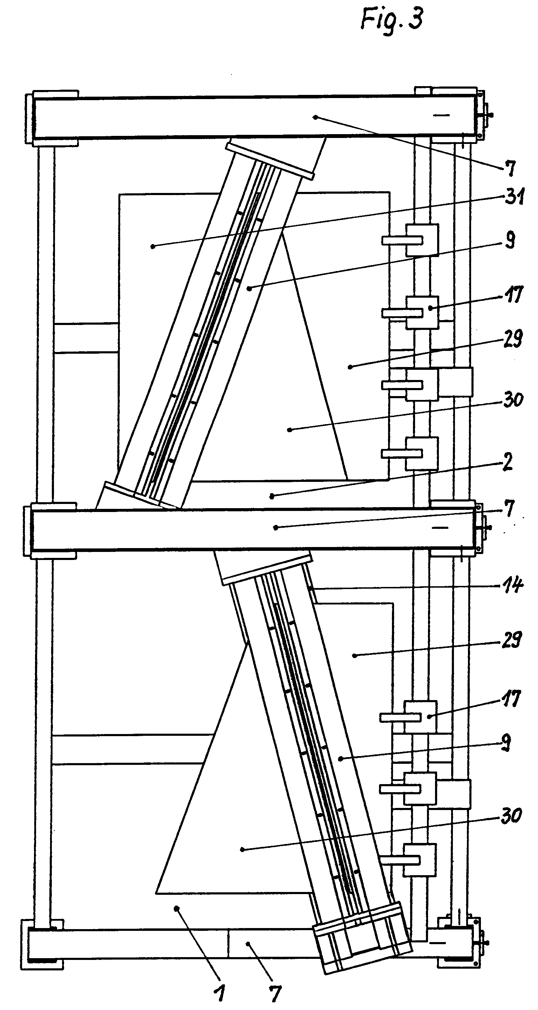

Fig. 3 zeigt die Herstellung von Schweißnähten an nichtparallelen Kanten dreier Blechplatinen 29;30;31. Dieses erfolgt ablaufmäßig in der vorbeschriebenen Art. Es wird hierbei die Möglichkeit der Einstellbarkeit der Schweißbalken 9 und der Spanneinrichtungen 14 auf einen Winkel genutzt, der abweichend von der rechtwinkligen Lage zu den Führungen 7 am Schweißtisch 1;2, dem Winkel der nichtparallelen Kanten der Blechplatinen 29;30;31 entspricht. Dabei ist im Beispiel der Verstellwinkel des Schweißbalkens 9 des ersten Schweißtisches 1 entgegengesetzt zu dem des zweiten Schweißtisches 2 gerichtet.
Alternativ dazu können auch die Schweißbalken 9 rechtwinklig zu ihren Führungen 7 angeordnet sein und die Blechplatinen 29;30;31 so verkantet eingeschoben werden, daß die zu verschweißenden Kanten unter der Schweißfuge positioniert werden. Hierbei ist erforderlich, die verschweißte erste und zweite Blechplatine 29;30 vor dem Transport auf den zweiten Schweißtisch 2 so weit zurück zu kanten, daß ihre Außenkanten parallel zum Schweißbalken 9 liegen.
Diese Beispiele zeigen nur eine Auswahl der Anwendungsmöglichkeiten. Es liegt im Rahmen der Erfindung, nahezu beliebige Kombinationen von Blechplatinen durch Schweißnähte schnell und einwandfrei zu verbinden. Weiterhin liegt es im Rahmen der Erfindung, mehr als zwei Schweißtische nebeneinander anzuordnen, um dadurch mehr Platinen in einem Durchlauf aneinander zu fügen.

## Patentansprüche

1. Einrichtung zum Transportieren, Spannen und Laserstrahlschweißen von mindestens zwei Blechplatinen gleicher oder unterschiedlicher Stärken und Formen, gleicher oder unterschiedlicher Größen und gleicher oder unterschiedlicher Werkstoffe zu einer Blechplatine,
gekennzeichnet durch folgende Merkmale:
- zwei nebeneinander angeordnete Schweißtische (1;2), von denen jeder an den quer zur Schweißrichtung liegenden Seiten (4;5;6) der Schweißtische (1;2) mit zwei seitlich angeordneten parallel zur Oberfläche des Schweißtisches (1;2) verlaufenden Führungen (7) versehen ist, auf denen ein Schweißbalken (9) waagerecht und senkrecht verfahr- und feststellbar gelagert ist, der mit Längsführungen versehen ist, auf denen ein Schlitten (10) mit einer Schweißoptik verfahrbar gelagert ist;
- einer unterhalb des Schweißbalkens (9) im Schweißtisch (1;2) verstellbar angeordneten Spanneinrichtung (14) für die zu schweißenden Blechplatinen, die diese gegen die Unterseite des Schweißbalkens (1;2) spannt;
- Schubkolbeneinheiten, die an beiden freien Seiten der Schweißtische (1;2) angeordnet sind; deren Kolbenstangen zur Schweißfuge gerichtet sind, die die auf den Schweißtisch (1;2) zwischen Zentriermittel abgelegten Blechplatinen unter die Schweißbalken (9) auf die Schweißfugen positionieren;
- Transportroboter(22), die die zu schweißenden Platinen von Transportpaletten (18) auf die Schweißtische (1;2) und fertiggeschweißte Platinen zur Weiterbearbeitung oder auf Fertigteilpaletten (20) transportieren;
- Greiferzangen (17), die an einer der freien Seiten der Schweißtische (1;2) längs zu diesen verschiebbar gelagert sind und die die geschweißten Blechplatinen von Schweißtisch (1) zu Schweißtisch (2) und zum Ablagetisch (15) transportieren.

2. Einrichtung nach Anspruch 1,
dadurch gekennzeichnet,
daß für beide Schweißtische (1;2) ein gemeinsamer Laser (13) angeordnet ist, in dessen Strahlengang für jeden Schweißtisch (1;2) eine Weiche (12) angeordnet ist, durch die der Laserstrahl über eine Strahlführung (11) zur Schweißoptik des jeweiligen Schweißtisches (1;2) im Wechsel zuschaltbar ist.

3. Einrichtung nach den Ansprüchen 1 und 2,
dadurch gekennzeichnet,
daß auf den Bereitstellpaletten (18) jeweils mehrere gleiche Blechplatinen (24;25;26) zeilenweise so nebeneinander auflegbar sind, daß ihre Verbindungskanten parallel zur Schweißfuge positioniert sind und am Transportroboter (22) eine Greiferspinne (23) mit zeilenweise aufgereihten Greifmitteln angeordnet ist.

4. Einrichtung nach den Ansprüchen 1 und 3,
dadurch gekennzeichnet,
daß auf den Bereitstellungspaletten (18) verstellbare Führungsmittel für die Blechplatinenstapel angeordnet sind.

5. Einrichtung nach den Ansprüchen 1 bis 4,
dadurch gekennzeichnet,
daß die erste und zweite Reihe Blechplatinen (24;25) mittels der Greiferspinne (23) auf den ersten Schweißtisch (1) zwischen die dortigen Zentriermittel übergebbar und die dritte Reihe Blechplatinen (26) auf den zweiten Schweißtisch (2) zwischen die dortigen Zentriermittel übergebbar sind.

6. Einrichtung nach den Ansprüchen 1 und 2,
dadurch gekennzeichnet,
daß auf den Bereitstellungspaletten (18) zwei Blechplatinen (27;28) so auflegbar sind, daß ihre Verbindungskanten parallel zur Schweißfuge positioniert sind und nur auf dem ersten Schweißtisch (1) ein Schweißvorgang erfolgt.

7. Einrichtung nach den Ansprüchen 1 und 2,
dadurch gekennzeichnet,
daß auf den Bereitstellungspaletten (18) drei Blechplatinen (29;30;31) mit nichtparallelen Verbindungskanten so auflegbar sind, daß die zusammengehörigen Verbindungskanten parallel zueinander positioniert sind und der jeweilige Schweißbalken (9) mit Spanneinrichtung (14) auf den abweichenden Winkel verstellbar ist.

8. Einrichtung nach mindestens einem der vorherigen Ansprüche,
dadurch gekennzeichnet,
daß die Verstellantriebe für die Schweißbalken(9), die Spanneinrichtungen (14), die Schlitten (10) für die Schweißoptiken und die Greiferzangen (17) automatisch numerisch positionierbar ausgeführt sind.

9. Einrichtung nach Anspruch 1,
dadurch gekennzeichnet,
daß auf jedem Schweißtisch (1;2) entweder zwei zu verbindende Blechplatinen oder eine Blechplatine und eine geschweißte Teilplatine oder zwei geschweißte Teilplatinen zueinander unter dem Schweißbalken (9) auf die Schweißfuge positionierbar sind.
